# EUROPEAN PATENT APPLICATION

(11) **EP 0 717 332 A1**
(43) Date of publication of application: **19.06.1996**
(21) Application number: 94309263.5
(22) Date of filing: 12.12.1994
(51) Int. Cl.: G05D 23/19, F24D 19/10, F16K 31/04, H02J 7/34, H02M 3/338

(54) **Electrical actuator control**

(71) Applicant: Alford, Anthony, Solihull, West Midlands B90 1DS (GB); Alford, Robert, Solihull, West Midlands B93 9XJ (GB)
(72) Inventor: Alford, Anthony, Solihull, West Midlands B90 1DS (GB)
(74) Representative: Jackson, Derek Charles

(57) **Abstract**

An electrical actuator control is used with an electrical actuator mechanism (7) for controlling the flow of fluid through a valve in a central heating system. The control incorporates a thermoelectric generator (1) to be arranged in heat transmissive relationship with the fluid, the flow of which is to be controlled by the valve or the like, flowing into a radiator of the central heating system, the thermoelectric generator providing a relatively constant low level of power. The power generated by the thermoelectric means (1) is stored in rechargeable electrical storage means (3) for intermittent operation of the electrical actuator mechanism (7).

## Description

The present invention relates to an electrical actuator control for controlling an actuator for a valve or the like.

The actuator may be a solenoid-operated or motorised actuator for a solenoid-operated or motorised valve or it may be any form of electrically powered mechanism, such as a solenoid or relay-controlled mechanism, for example for operating a heating or air-conditioning vent and/or flap.

Fluid control valves are commonly used in central heating systems to divert flow of hot water between a hot water tank and the central heating system. Such valves are generally operated by means of an actuator incorporating a geared motor powered from the electrical mains supply to open and close a port in the valve.

Alternatively, in domestic central heating systems it is common practice to control operation of a water heater on the basis of a signal from a thermostat positioned in one of the rooms to be heated.

Another type of valve commonly found in central heating systems is a thermostatic radiator valve which is connected in series with a hot water radiator and which regulates the flow of water through the radiator by means of an actuator which incorporates a plunger that progressively closes the valve port as the room temperature increases. Operation of the plunger is generally based on the expansion and contraction of a fluid which senses the room temperature and is operatively connected to the plunger. Expansion and contraction of the fluid functions to regulate the flow of hot water through the radiator on the basis of the room temperature. However, adjustment of the room temperature requires manual adjustment of the valve.

The disadvantage of known controls for central heating systems is that there is no effective way to control the temperature of individual radiators in response to the temperature requirements of any particular heated area, particularly where such controls are to be incorporated into an existing system. Temperature requirements may be assessed on whether or not the area is in use, the cost of heating the area and other considerations.

Conventional motorised or solenoid-operated valves not only require a signal to instruct the actuator to cause the valve to open or close, but additionally require power to effect opening or closing of the valve. Such power is conventionally supplied by the mains electrical supply or by means of a battery. Use of the mains electrical supply has the disadvantage that installation of such a control system in an existing central heating system requires the incorporation of considerable additional electrical wiring into the building with consequent disruption to the building and use thereof, while battery power has the disadvantage of being bulky and of requiring regular replacement or recharging.

It is therefore an object of the present invention to provide an electrical actuator control for controlling an actuator for a valve or the like, such as a solenoid-operated or motorised valve, in a hot water or air heating system in a reliable manner which does not cause significant disruption to the building or the like in which the electrical actuator control is to be installed.

According to the present invention there is provided An electrical actuator control for use with an electrical actuator mechanism for controlling the flow of fluid (such as air or liquid) through a valve or the like, wherein the control incorporates a thermoelectric generator to be arranged in heat transmissive relationship with the fluid, the flow of which is to be controlled by the valve or the like, and rechargeable means for storing electrical energy generated by the thermoelectric generator for intermittently operating the electrical actuator mechanism.

The thermoelectric generator may additionally be in heat transmissive relationship with ambient air, for example by means of a heat sink.

A voltage converter is preferably provided intermediate the thermoelectric generator and the rechargeable storage means.

The rechargeable storage means may comprise a rechargeable battery or capacitative means.

The control may additionally include means for monitoring the state of charge of the rechargeable storage means. The monitoring means typically functions, on detecting a predetermined lower level of charge of the rechargeable storage means, to operate the actuator mechanism to open the valve or the like.

The control may be incorporated into a housing together with the actuator mechanism. The actuator mechanism may incorporate a cam for actuating a valve plunger. The cam may include stop means which, on engagement with the valve plunger, causes the actuator mechanism to stall, the control incorporating means for sensing stalling of the actuator mechanism.

The control may include transceiver means, for example a radio-frequency transceiver means, for exchanging data with a central control unit.

The energy generated by the thermoelectric generator may be supplemented, for example by means of a photo-electric cell which may be mounted externally of the actuator or of the housing therefor, or by means of electrical magnetic induction.

For a better understanding of the present invention and to show more clearly how it may be carried into effect reference will now be made, by way of example, to the accompanying drawings in which:
Figure 1 is a diagrammatic representation of the functions of an electrical actuator control according to the present invention;
Figure 2 illustrates in more detail a thermoelectric generator forming part of the electrical actuator control of Figure 1;
Figure 3 illustrates in more detail a circuit diagram of a voltage converter forming part of the electrical actuator control of Figure 1;
Figure 4 illustrates in more detail an input/output interface forming part of the electrical actuator control of Figure 1; and
Figure 5 illustrates in more detail an electrical actuator for use with the electrical actuator control of Figure 1.

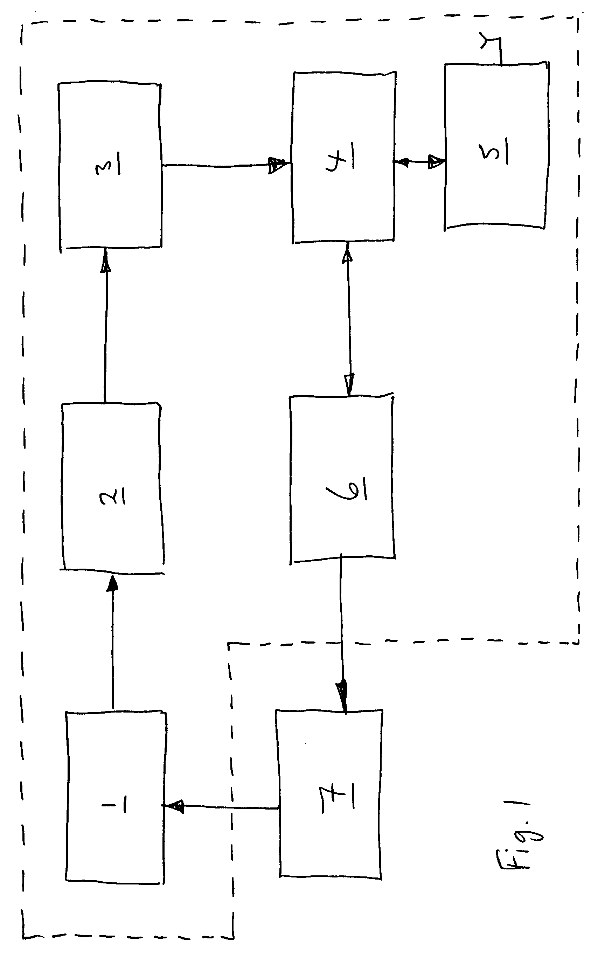

The electrical actuator control functionally illustrated in Figure 1 comprises an electrical power source in the form of a thermoelectric generator 1 which is subjected to a temperature differential between the hot inflowing water to a radiator (not shown in Figure 1) and either the cooler outflowing water from the radiator or ambient temperature, for example as represented by a heat sink. The temperature differential may be as much as 50°C, but is more usually in the range from 10 to 20°C. Commonly available known thermoelectric devices are able to generate an electrical output power in the typical range of 50 to 300 milliwatts for a device having a nominal heat pumping capacity of about 13 Watts.

A voltage converter 2 converts the low impedance source voltage, of typically 50 to 500 millivolts, from the thermoelectric generator 1 to a usable voltage, for example in the range from 9 to 12 volts. The output voltage from the voltage converter 2 is used to charge a rechargeable storage device 3 such as a capacitor or a small rechargeable battery. Thus the storage device permits the thermoelectric generator 1 to supply the short-term high-energy requirements of, for example, actuators, indicators and transceivers.

A central processing unit 4 has a primary function of maintaining and updating a database of system variables and local variables. System variables include information such as boiler temperature, external ambient temperature, desired room ambient temperature, time, room occupancy and tariff rates, which variables are receivable from a data network under the control of a central control unit (not shown). Local variables include information such as actual room temperature, water temperature, voltage levels and state of charge. Other variables may also be included as system variables and/or local variables and at least some of the variables exemplified as either system variables or local variables can be classified differently. The central processing unit 4 processes the information by means of a resident programme to determine what action to perform. Actions that can be performed under control of the central processing unit include opening or closing a valve by means of an electrical actuator 7, sending data to a data network by means of a transceiver 5, and requesting data from other devices attached to the data network.

An input/output interface 6 performs buffering between load and input connections and the central processing unit 4. The primary function of the interface 6 is to provide the correct electrical drive circuit to operate the electrical actuator 7.

The electrical actuator 7 in the illustrated embodiment comprises a four phase stepper motor, the four winding stepping sequence thereof being controlled from the central processing unit 4 and buffered by four transistor amplifiers comprising part of the interface 6.

The thermoelectric generator 1 is shown in more detail in Figure 2 and comprises a thermoelectric element 10 which operates on the basis of the well-know Seebeck effect. The thermoelectric element 10 comprises a plurality of p-type semiconductor pellets 11 and a plurality of n-type semiconductor pellets 12 electrically connected in series and thermally connected in parallel, the pellets being sandwiched between two plates 13, 14 of ceramic material. The external surface of one of the plates 13 is exposed to a relatively high temperature, while the external surface of the other of the plates 14 is subjected to a relatively low temperature in order to create a temperature gradient across the element 10. When an electrical load is connected across the stack of series-connected p-n junctions a current flows and power is transferred to the electrical load.

In the illustrated embodiment, the temperature gradient is provided by exposing the plate 13 of the element 10 to the temperature of a pipe 15 for the hot water flowing into the radiator, and by exposing the plate 14 of the element 10 either to the temperature of a pipe 16 for the cooler water flowing out of the radiator and/or to ambient temperature by way of a heat sink. In practice, the thermoelectric element can be exposed to the temperatures of the inflowing and outflowing water by incorporating the thermoelectric element 10 within a housing for the actuator, which housing may be made, for example, by moulding or casting, and by arranging the pipes 15 and 16 in contact with the plates 13 and 14 of the thermoelectric element 10.

The thermoelectric element 10 may be, for example, a Marlow Industries MI1064T thermoelectric cooler of 13 Watts rating and used in reverse mode. A heat differential of some 10 to 50°C generates electrical power at an efficiency in the range form 0.5 to 2.3 percent, giving rise to a usable power in the range from 50 to 300 milliWatts. Power ratings in the upper part of the range are more readily achievable at an ambient temperature of about 20°C with the use of a heat sink having a thermal resistance to ambient air of 1°C/Watt. However, in systems in which continuous supplies of hot and cold water are available, the power output from the thermoelectric element 10 can be increased and any heatsink requirements can be minimised.

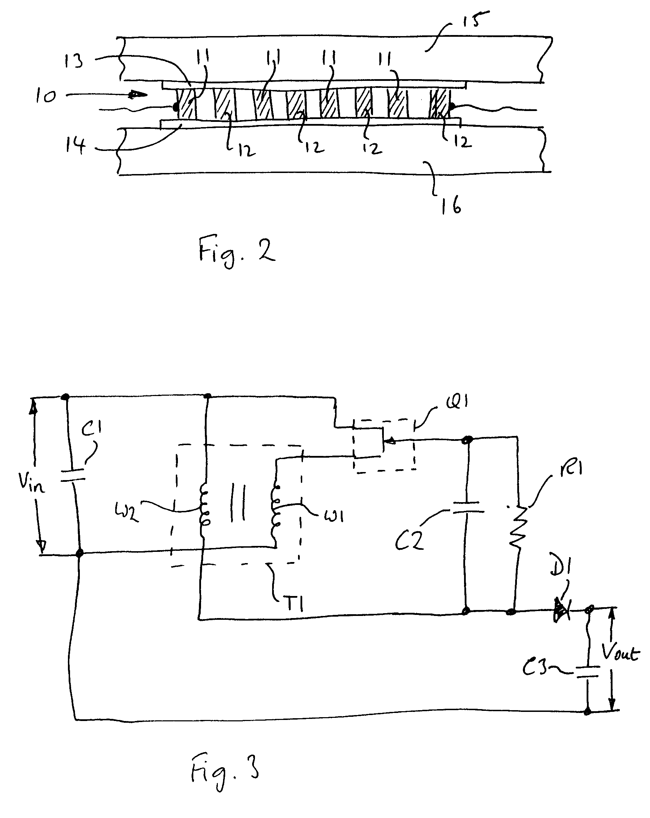

The voltage converter 2 is shown in more detail in Figure 3 and functions to raise the voltage output of about 0.3 volts from the thermoelectric generator 1 to a higher usable voltage of, typically, 12 volts. This is achieved by the transistor Q1 (for example, National Semiconductor part J110, n-channel FET) switching winding W1 of transformer T1 at a frequency determined by feedback components comprising winding W2 and capacitor C2 in known manner. Winding W2 is magnetically coupled to winding W1 and a voltage transformation of the input voltage Vᵢₙ from the thermoelectric generator 1 occurs in accordance with the ratio of turns of W2:W1. The output voltage Vₒᵤₜ is somewhat less than the transformed voltage because of a voltage drop as a result of diode D1 and other small losses in the circuit. Of the other components illustrated in the circuit, capacitor C1 provides impedance matching, resistor R1 performs a biasing function, and capacitor C3 smooths the output voltage.

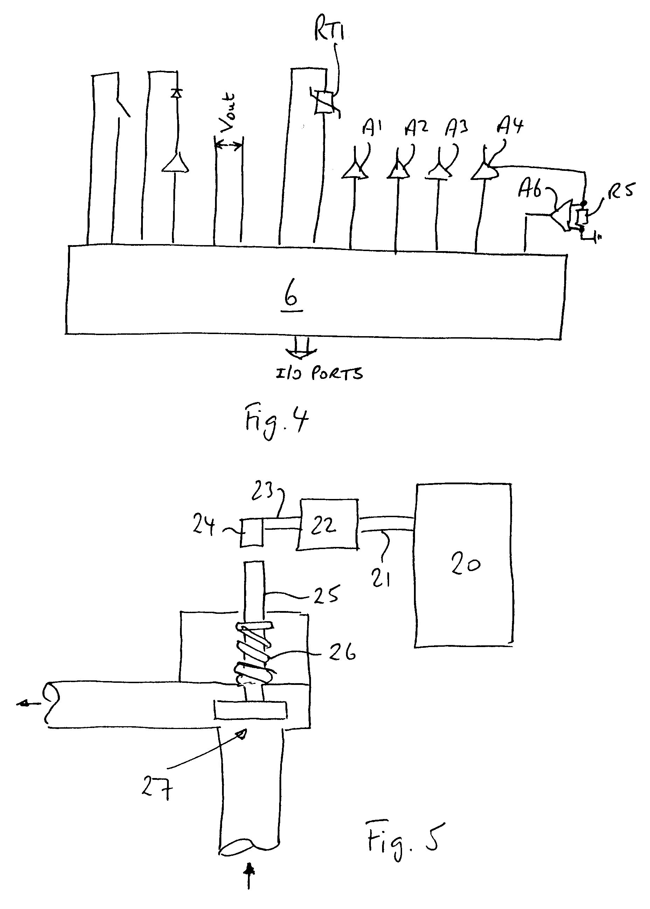

The instantaneous power available from the thermoelectric generator 1 is small and, by itself, is unable to provide the power required to operate an electrical valve actuator to open or close a valve port of a radiator valve. Known motorised radiator valves which incorporate a spring biased plunger require a force of about 30N to depress a plunger some 3 mm in order to close off the water flow against the pressure created by a circulation pump. The primary purpose of the electrical storage device 3 is therefore to accept a relatively low constant charge from the voltage converter 2 in order to service an intermittent short-term demand from the actuator 7. The electrical storage device 3 shown in Figure 4 therefore comprises a small (PP3 size) rechargeable NiCad battery rated at a nominal voltage of 8.4 volts and a capacity of 110 mAhr. However, alternative rechargeable electrical storage devices may be used, such as capacitative devices.

Because the actuator 7 will only be operated intermittently, it can be shown in a simple manner by the skilled person that, for a stepper motor having a power consumption of 5 Watts, a hot water temperature of only 40°C will provide sufficient power to service about 25 actuator operations per hour, while a hot water temperature of 80°C will provide sufficient power to service about 155 actuator operations per hour.

The function of the central processing unit 4 is to control the actuator 7 in accordance with resident programme and the local and system variables. A suitable device for the central processing unit is Motorola's MC143120 which contains sufficient memory and processing power for such an application and is able to provide the protocol and communication functions to operate the transceiver 5. An important function of the central processing unit 4 is to monitor battery usage and charge availability so that, in the event of insufficient charge from the thermoelectric generator 1, the actuator is operated to move the valve to the open position to ensure recharging will occur whenever the central heating system is in use.

In the illustrated embodiment the transceiver 5 comprises a radio frequency transceiver such as RF-10 model 50070 supplied by Echelon Corporation. However, alternative forms of transceiver can be provided, such as a twisted pair cable network, coaxial or other cable, infra-red radiation, fibre-optic cable, or signal injection into the mains electricity supply. The transceiver 5 is controlled by way of the central processing unit 4 to transmit changes in local variables to other electrical actuator controls and to any other relevant control devices which may form part of the network and to receive changes in system variables from a central control device and changes in local variables from other electrical actuator controls and any other relevant control devices that may form part of the network.

The input/output interface 6, illustrated in more detail in Figure 4, ensures that voltage levels between the central processing device 4 and the input/output devices are correctly matched. The primary function of the input/output interface 6 is the power amplification of the central processing unit signals to the electrical actuator load. In the case of the described four-phase stepper motor, four of the input/output lines of the central processing unit are buffered by way of four transistor amplifiers A1, A2, A3 and A4. Other functions include stall current detection by way of amplifier A6 and resistor R5, temperature sensing of water flowing into the radiator by way of thermistor RT1 for local processing and transmission to a main boiler control, monitoring of the output voltage of the thermoelectric generator 1, LED output and a switch for test purposes.

The electrical actuator 7 is illustrated in more detail in Figure 5 and comprises a four phase stepper motor 20 having a motor shaft 21 which forms the input shaft of a gearbox 22. The output shaft 23 of the gearbox 22 is provided with an offset cam 24 which has a throw of about 3 mm. The cam operates in one rotational direction of the motor 20 to directly or indirectly depress a valve plunger 25, against the biasing force of a spring 26, to close a port 27 through which hot water flows into the radiator. The cam 24 is provided with an end stop which causes the motor to stall when the end stop engages with the valve plunger or the like. As described above, the resulting stall current is detected by a stall current comparator comprising part of the interface 6 and the motor stall data is passed to the central processing unit 4 where it is used to initiate de-energisation of the motor. Reverse operation of the actuator 7 is less energy-demanding because of the biasing force of the spring 26.

An alternative to the use of motor 20 is a chamber containing a material having a high coefficient of thermal expansion, such as a suitable wax, liquid, gas or saturated vapour, and which expands in response to heat generated by an electrical resistance to move a piston in order to move the valve plunger 25.

Although it is not shown in the drawings, the valve plunger 25 may be provided with a latching mechanism intermediate the plunger and its operating means, which latching mechanism is capable of maintaining the valve plunger in a number of predetermined positions from fully open to fully closed. To this end, the latching mechanism may include a housing for two mating cogs which are provided with interengageable axial castellations which are inclined in a peripheral direction at the free opposing ends thereof. One of the cogs is movable in the axial direction of the valve plunger by the operating means but is restrained against rotation by engagement with the housing. The other cog is also movable in the axial direction of the valve plunger and is restrained against rotation over part of the axial extent of movement thereof. Both cogs may be restrained against rotation by engagement with axial grooves in the housing. When both cogs are restrained against rotation, the arrangement is such that the free ends of the castellations of one cog abut against the castellations of the other cog, which the inclined ends thereof tending to cause rotation of the other cog. Thus when movement of the one cog causes the other cog to move past the end of that part of the housing which prevents rotation thereof, the other cog rotates and the castellations of the two cogs are able to interengage thus permitting the other cog to move towards the one cog. When the one cog is retracted, the other cog again becomes restrained against rotation with the castellations of the two cogs able to abut against each other. By varying the extent of axial movement of the other cog towards the one cog, for example by providing a smaller number of castellations on the other cog and by varying the axial extent of the restraining grooves towards the other cog it is possible to control the axial position of the other cog once the one cog has been retracted. A spring mounted member, the spring force of which is greater than the force of the spring 26 can be used to move the valve plunger to a closed position despite the need for movement of the other cog towards the one cog.

The utility of the electrical actuator control according to the present invention can be demonstrated by reference, for example, to a hotel which may have, for example an average occupancy level of 40 percent. Typically, the average 60 percent of rooms not occupied is distributed among different rooms on different days. If, in accordance with current practice, the heating in all rooms is set to be on whenever the main central heating boiler is on, a very considerable proportion of the energy consumed is wasted. However, with the electrical actuator controls according to the present invention fitted to the radiators, which can be effected with very little disruption to the hotel, booking data regarding the various rooms can be used to ensure that the radiators in a particular room are only on when the room is booked. Further economies can be achieved by providing the rooms with occupancy sensors connected to the data network so that room temperature can be reduced when a room is booked but not occupied.

The ability of the central processing unit of the electrical actuator according to the present invention to transmit data to a central control unit can be used, for example, in a situation where a radiator is at the end of a long piping run and, even when the radiator valve is fully open, the requested room temperature cannot be achieved due to heat loss along the piping run. In such a case, the electrical actuator control can send data to the central control unit to increase the boiler output temperature until the local room temperature requirements are satisfied. Other electrical actuators on the network will respond automatically to maintain the respective room temperature at the requested level.

## Claims

1. An electrical actuator control for use with an electrical actuator mechanism (7) for controlling the flow of fluid through a valve or the like characterised in that the control incorporates a thermoelectric generator (1) to be arranged in heat transmissive relationship with the fluid, the flow of which is to be controlled by the valve or the like, and rechargeable means (3) for storing electrical energy generated by the thermoelectric generator (1) for intermittently operating the electrical actuator mechanism (7).

2. An electrical actuator control as claimed in claim 1, characterised in that the thermoelectric generator (1) is additionally in heat transmissive relationship with ambient air, for example by means of a heat sink.

3. An electrical actuator control as claimed in claim 1 or 2, characterised in that a voltage converter (2) is provided intermediate the thermoelectric generator (1) and the rechargeable storage means (3).

4. An electrical actuator control as claimed in claim 1, 2 or 3, characterised in that the rechargeable storage means (3) comprises a rechargeable battery or capacitative means.

5. An electrical actuator control as claimed in any preceding claim, characterised in that the control includes means for monitoring the state of charge of the rechargeable storage means (3).

6. An electrical actuator control as claimed in claim 5, characterised in that the monitoring means functions, on detecting a predetermined lower level of charge of the rechargeable storage means (3), to operate the actuator mechanism (7) to open the valve or the like.

7. An electrical actuator control as claimed in any preceding claim, characterised in that the control is incorporated into a housing together with the actuator mechanism (7).

8. An electrical actuator control as claimed in claim 7, characterised in that the actuator mechanism (7) incorporates a cam (24) for actuating a valve plunger (25).

9. An electrical actuator control as claimed in claim 8, characterised in that the cam (24) includes stop means which, on engagement with the valve plunger (25), causes the actuator mechanism (7) to stall and in that the control incorporates means for sensing stalling of the actuator mechanism.

10. An electrical actuator control as claimed in any preceding claim, characterised in that the control includes transceiver means (5), for example a radio-frequency transceiver means, for exchanging data with a central control unit.
